# EUROPEAN PATENT SPECIFICATION

(11) **EP 3 954 864 B1**
(45) Date of publication and mention of the grant of the patent: **02.10.2024**
(21) Application number: 20190357.2
(22) Date of filing: 10.08.2020
(51) Int. Cl.: F01D 5/14, F01D 5/18

(54) **BLADE/VANE COOLING PASSAGES**
ROTOR-/SCHAUFELKÜHLPASSAGEN
PASSAGES DE REFROIDISSEMENT DE PALE/D'AUBE

(43) Date of publication of application: 16.02.2022
(73) Proprietor: RTX Corporation, Farmington, CT 06032 (US)
(72) Inventor: SPANGLER, Brandon W., Vernon, CT Connecticut 06066 (US); PACK, David R., Ellington, CT Connecticut 06029 (US)
(74) Representative: Dehns

(56) References cited:
- EP-A2- 1 586 738
- EP-A2- 1 793 085
- EP-A2- 3 480 432
- WO-A1-2017/009051
- US-B1- 6 206 638

## Description

### FIELD

The present invention relates to airfoils for use with gas turbine engines and, more particularly, to blades and/or vanes having internal ribs that transition from an attachment cross section to an airfoil cross section with multiple cavities to provide cooling airflow to the airfoils.

**BACKGROUND** Gas turbine engines typically include a compressor section, a combustor section and a turbine section. The compressor section and the turbine section each have blades including rotating blades and stationary vanes. It may be desirable to provide a cooling (or heating, in the case of the compressor section) airflow through the airfoils of blades due to the relatively high temperatures at which they are operated. In that regard, the airfoils may include outer walls along with internal ribs or walls that form internal cavities through which a cooling airflow may flow from attachments coupled to the airfoils. The internal ribs may extend radially from an attachment end of a blade to a tip of an airfoil. Because the outer walls are exposed to relatively hot air, they may experience greater thermal expansion than the internal ribs or walls. Ribs designed for an airfoil may create a flexible structure in order to account for the thermal expansion of the outer walls; however, ribs designed for an attachment may create a stiff structure in order to prevent rib and attachment crushing. Such difference in thermal expansion design of an airfoil compared to stiffness design of an attachment present various obstacles in providing an efficient cooling system for turbine blades as the airfoil ribs transition to the attachment ribs. WO 2017/009051 A1 discloses an airfoil with the features of the preamble of claim 1.

EP 1793085 A2, EP 1 586 738 A2, US 6 206 638 B1 and EP 3 480 432 A2 disclose other examples of airfoils for gas turbine engines.

### SUMMARY

In an aspect of the invention, an airfoil for use with a gas turbine engine is provided according to claim 1.

In another aspect of the invention, a blade for use with a gas turbine engine is provided according to claim 4.

In another aspect of the invention, a gas turbine engine is provided according to claim 8.

Features of embodiments of the invention are set forth in the dependent claims.

### BRIEF DESCRIPTION OF THE DRAWINGS

The subject matter of the present disclosure is particularly pointed out and distinctly claimed in the concluding portion of the specification. A more complete understanding of the present disclosure, however, is best be obtained by referring to the detailed description and claims when considered in connection with the drawing figures, wherein like numerals denote like elements.
FIG. 1 is a cross-sectional view of an exemplary gas turbine engine, in accordance with various embodiments;
FIG. 2 is a cross-sectional view of a portion of a high pressure turbine section of the gas turbine engine of FIG. 1, in accordance with various embodiments;
FIG. 3 is a cross-sectional view of a portion of a high pressure turbine section of the gas turbine engine of FIG. 1, in accordance with various embodiments;
FIGS. 4A and 4B illustrate an airfoil radial cross section of an airfoil, in accordance with various embodiments outside the subject-matter of the claims;
FIGS. 5A and 5B illustrate interaction of a pressure side cavity created by the plurality of ribs of the airfoil of FIGS. 4A and 4B, along with changes in internal cavity shapes, due to thermal expansion of the pressure side wall, in accordance with various embodiments outside the subject-matter of the claims;
FIGS. 6A and 6B illustrate interaction of the plurality of ribs of the airfoil of FIGS. 4A and 4B, along with changes in internal cavity shapes, due to thermal expansion of the pressure side wall in accordance with various embodiments outside the subject-matter of the claims;
FIGS. 7A and 7B illustrate an orthogonal view of a plurality of cavities extending from a radial attachment plane to a radial airfoil cross section of a blade, in accordance with various embodiments outside the subject-matter of the claims;
FIGS. 8A, 8B illustrate an orthogonal view of a plurality of cavities extending from a radial attachment plane to a radial airfoil cross section of a blade, in accordance with various embodiments outside the subject-matter of the claims;
FIG. 8C illustrates the invention as claimed;
FIGS. 9A and 9B are cross-sectional views of various blades having transitional ribs from an attachment to an airfoil of a blade with various additional cooling features, in accordance with various embodiments.

### DETAILED DESCRIPTION

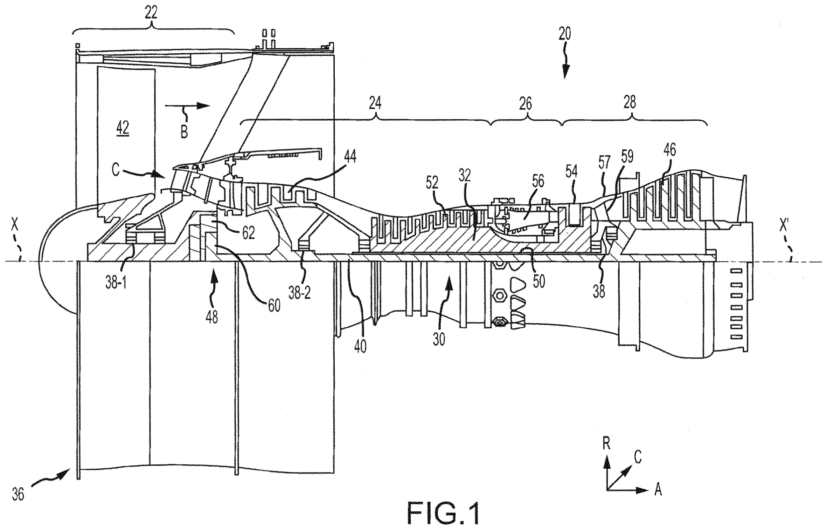

With reference to FIG. 1, a gas turbine engine 20 is provided. As used herein, "aft" refers to the direction associated with the tail (e.g., the back end) of an aircraft, or generally, to the direction of exhaust of the gas turbine engine. As used herein, "forward" refers to the direction associated with the nose (e.g., the front end) of an aircraft, or generally, to the direction of flight or motion. As utilized herein, radially inward refers to the negative R direction and radially outward refers to the R direction. An A-R-C axis is shown throughout the drawings to illustrate the relative position of various components.

The gas turbine engine 20 may be a two-spool turbofan that generally incorporates a fan section 22, a compressor section 24, a combustor section 26 and a turbine section 28. In operation, the fan section 22 drives air along a bypass flow-path B while the compressor section 24 drives air along a core flow-path C for compression and communication into the combustor section 26 then expansion through the turbine section 28. Although depicted as a turbofan gas turbine engine 20 herein, it should be understood that the concepts described herein are not limited to use with turbofans as the teachings may be applied to other types of turbine engines including three-spool architectures and turboshaft or industrial gas turbines with one or more spools.

The gas turbine engine 20 generally comprise a low speed spool 30 and a high speed spool 32 mounted for rotation about an engine central longitudinal axis X-X' relative to an engine static structure 36 via several bearing systems 38, 38-1, and 38-2. It should be understood that various bearing systems 38 at various locations may alternatively or additionally be provided, including for example, the bearing system 38, the bearing system 38-1, and the bearing system 38-2.

The low speed spool 30 generally includes an inner shaft 40 that interconnects a fan 42, a low pressure (or first) compressor section 44 and a low pressure (or second) turbine section 46. The inner shaft 40 is connected to the fan 42 through a geared architecture 48 that can drive the fan shaft 98, and thus the fan 42, at a lower speed than the low speed spool 30. The geared architecture 48 includes a gear assembly 60 enclosed within a gear housing 62. The gear assembly 60 couples the inner shaft 40 to a rotating fan structure.

The high-speed spool 32 includes an outer shaft 50 that interconnects a high pressure (or second) compressor section 52 and the high pressure (or first) turbine section 54. A combustor 56 is located between the high-pressure compressor 52 and the high pressure turbine 54. A mid-turbine frame 57 of the engine static structure 36 is located generally between the high-pressure turbine 54 and the low pressure turbine 46. The mid-turbine frame 57 supports one or more bearing systems 38 in the turbine section 28. The inner shaft 40 and the outer shaft 50 are concentric and rotate via the bearing systems 38 about the engine central longitudinal axis X-X', which is collinear with their longitudinal axes. As used herein, a "high pressure" compressor or turbine experiences a higher pressure than a corresponding "low pressure" compressor or turbine.

The core airflow C is compressed by the low-pressure compressor section 44 then the high-pressure compressor 52, mixed and burned with fuel in the combustor 56, then expanded over the high-pressure turbine 54 and the low pressure turbine 46. The mid-turbine frame 57 includes airfoils 59 which are in the core airflow path. The turbines 46, 54 rotationally drive the respective low speed spool 30 and high-speed spool 32 in response to the expansion.

The gas turbine engine 20 is a high-bypass ratio geared aircraft engine. The bypass ratio of the gas turbine engine 20 may be greater than about six (6). The bypass ratio of the gas turbine engine 20 may also be greater than ten (10:1). The geared architecture 48 may be an epicyclic gear train, such as a star gear system (sun gear in meshing engagement with a plurality of star gears supported by a carrier and in meshing engagement with a ring gear) or other gear system. The geared architecture 48 may have a gear reduction ratio of greater than about 2.3 and the low-pressure turbine 46 may have a pressure ratio that is greater than about five (5). The diameter of the fan 42 may be significantly larger than that of the low-pressure compressor section 44, and the low-pressure turbine 46 may have a pressure ratio that is greater than about five (5:1). The pressure ratio of the low-pressure turbine 46 is measured prior to an inlet of the low-pressure turbine 46 as related to the pressure at the outlet of the low pressure turbine 46. It should be understood, however, that the above parameters are exemplary of various embodiments of a suitable geared architecture engine and that the present disclosure contemplates other turbine engines including direct drive turbofans.

The next generation turbofan engines are designed for higher efficiency and use higher pressure ratios and higher temperatures in the high-pressure compressor 52 than are conventionally experienced. These higher operating temperatures and pressure ratios create operating environments that cause thermal loads that are higher than the thermal loads conventionally experienced, which may shorten the operational life of current components.

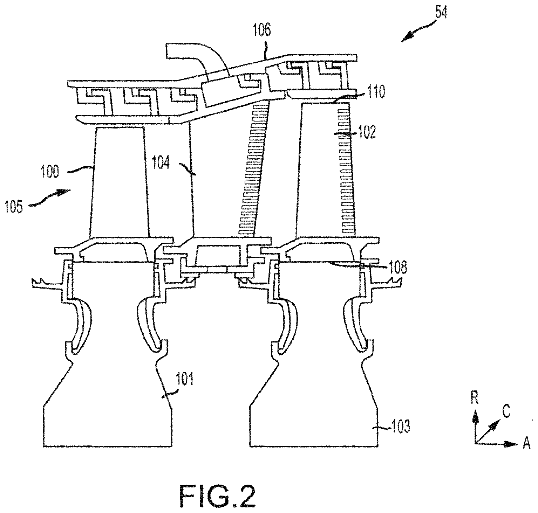

Referring now to FIGS. 1 and 2, the high-pressure turbine section 54 may include multiple blades 105 including multiple rows, or stages, of blades including a first blade 100 and a second blade 102, along with rows, or stages, of vanes located therebetween including a vane 104. The blades 100, 102 may be coupled to disks 101, 103 respectively which facilitate rotation of the blades 100, 102 about the axis X-X'. The vane 104 may be coupled to a case 106 and may remain stationary relative to the axis X-X'.

The blade 102 may include an inner diameter edge 108 and an outer diameter edge 110. Due to relatively high temperatures within the high-pressure turbine section 54, it may be desirable for the blade 102 (and the vane 104) to receive a flow of cooling air. In that regard, the blade 102 may receive a cooling airflow from the inner diameter edge 108 or the outer diameter edge 110. The blade 102 may define cavities that transport the cooling airflow through the blade 102 to the other of the inner diameter edge 108 or the outer diameter edge 110.

Improved cooling passages will be described throughout the disclosure with reference to the blade 102. However, one skilled in the art will realize that the cooling passage design implemented in the blade 102 may likewise be implemented in the vane 104, or any airfoil (including a rotating blade or stationary vane) in any portion of the compressor section 24 or the turbine section 28.

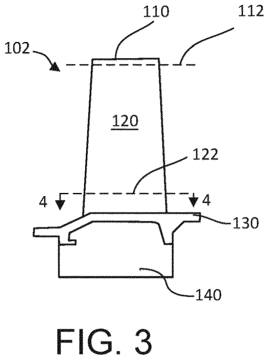

Referring now to FIG. 3, a side view of a blade 102, in accordance with various embodiments, is illustrated. The blade 102 may comprise an airfoil 120 extending radially outward from a platform 130, and an attachment 140 extending radially inward from the platform 130. A radial airfoil plane 122 is defined by the cross section 4-4 taken proximate the inner diameter of airfoil 120. Referring back to FIG. 2, the attachment 140 may be coupled to disk 101.

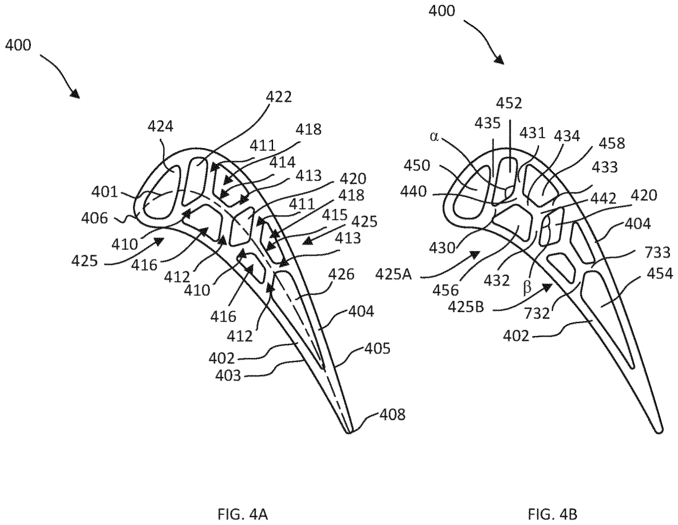

Referring now to FIGS. 4A and 4B, an airfoil cross sectional geometry 400 of radial airfoil plane 122, in accordance with various embodiments not encompassed by the wording of the claims, is illustrated. The airfoil 120 includes a pressure side wall 402 and a suction side wall 404. The pressure side wall 402 may receive a hot airflow from the combustor section 26 of the gas turbine engine 20 of FIG. 1. In that regard, the pressure side wall 402 may be exposed to greater pressure than the suction side wall 404 during operation of the gas turbine engine 20 of FIG. 1. The hot airflow may cause the blade 102 to rotate about the A axis.

The airfoil 120 also includes a leading edge 406 and a trailing edge 408. The leading edge 406 may be located axially forward of the trailing edge 408 and may receive the hot airflow prior to the trailing edge 408. The airfoil may also include a mean camber line 401 that represents the curved line that plots the midpoint between the pressure surface 403 and suction surface 405.

The airfoil 120 may include a plurality of cavities 416, 418, 420, 422, 424, and 426. The plurality of cavities 416, 418, 420, 422, 424, and 426 may all be discrete airflow passages. Cavities 422, 424 may have a single air source, and the remaining plurality of cavities 416, 418, 420, and 426 may all have discrete airflow. The airfoil further defines a plurality of internal airfoil ribs 425 having sets of airfoil ribs 410, 411, 412, 413, and 414 that may define a plurality of cavities 416, 418 and an internal cavity 420. The plurality of cavities 416, 418 may receive a cooling airflow to reduce a temperature of the blade 102. The airfoil 120 includes a first set of pressure side ribs 410 extending from the pressure side wall 402, away from the leading edge 406, and oriented in a first direction. A first set of suction side ribs 411 extends from the suction side wall 404, away from the leading edge 406, and be oriented in a second direction. As shown in FIG. 4B, a first pressure side rib 430 from the first set of pressure side ribs 410 forms a first vertex 440 with a first suction side rib 431 from the first set of suction side ribs 411. The first vertex 440 may create an angle α between the first pressure side rib 430 and the first suction side rib 431 The angle α may be between 100 degrees and 170 degrees. Furthermore, the angle α may be between 120 degrees and 150 degrees. The first vertex 440 may be at, or near the mean camber line 401. By having a first vertex 440 less than 180 degrees, the first pressure side rib 430 and the first suction side rib 431 provide flexibility for the hot pressure side wall 402 and hot suction side wall 404 to expand, minimizing thermal stresses.

A forward rib 435 may extend from the intersection of the first pressure side rib 430 and the pressure side wall 402 in a substantially parallel direction to the first suction side rib 431 to the suction side wall 404. The forward rib 435 may separate a forward leading-edge cavity 450 and an aft leading edge cavity 452, both of which are disposed forward of pressure side cavity 456 and suction side cavity 458.

The airfoil 120 includes a second set of pressure side ribs 412 extending from the pressure side wall 402, away from the trailing edge 408, and oriented in a third direction. A second set of suction side ribs 413 extends from the suction side wall 404, away from the trailing edge 408, and be oriented in a fourth direction. As shown in FIG. 4B, a second pressure side rib 432 from the second set of pressure side ribs 412 forms a second vertex 442 with a second suction side rib 433 from the second set of suction side ribs 413. The second vertex 442 may create an angle β between the second pressure side rib 432 and the second suction side rib 433. The angle β may be between 100 degrees and 170 degrees. Furthermore, the angle β may be between 120 degrees and 150 degrees. The second vertex 442 may be at, or near, the mean camber line 401. The second vertex 442 may be aft of the first vertex 440. By having a second vertex 442 less than 180 degrees, the second pressure side rib 432 and the second suction side rib 433 provide flexibility for the hot pressure side wall 402 and hot suction side wall 404 to expand, minimizing thermal stresses.

The airfoil 120 includes a set of internal ribs 414 that may be disposed between the pressure side wall 402 and the suction side wall 404. The set of internal ribs 414 may extend in a fifth direction. The fifth direction may be substantially parallel to a tangent line from the mean camber line 401, and the tangent line be generated from a point on the mean camber line 401 that is near a midpoint of a rib from the internal set of ribs 414. In various embodiments, the set of internal ribs 414 may follow the curvature of the mean camber line 401. As shown in FIG. 4B, a camber rib 434 from the set of internal ribs 414 extends from the first vertex 440 to the second vertex 442. In various embodiments not encompassed by the wording of the claims, the camber rib 434 may be substantially linear. In various embodiments not encompassed by the wording of the claims, the camber rib may be curved.

As shown in FIG. 4B, ribs 430, 431, 432, 433, and 434 form a first plurality of internal airfoil ribs 425A. A second plurality of internal airfoil ribs 425B are disposed aft of the first plurality of internal airfoil ribs 425A. Disposed between a portion of the first plurality of internal airfoil ribs 425A and the second plurality of internal airfoil ribs 425B is an internal cavity 420. The internal cavity 420 has a hexagonal shaped cross section.

Referring now to FIG. 4A, the plurality of cavities 416, 418 and internal cavity 420 may be oriented in such a way as to segregate the cooling flows into different regions. For example, the set of pressure side cavities 416 may transport a pressure side cooling airflow, and the set of suction side cavities 418 may transport a suction side cooling airflow. Likewise, and with brief reference to FIGS. 2, 4A, and 4B, as the internal cavity 420 may be bordered by ribs only instead of the pressure side wall 402 or the suction side wall 404, the cooling airflow traveling through the internal cavity 420 remains relatively cool. In that regard, the internal cavity 420 may provide relatively cool air to the inner diameter edge 108 and/or the outer diameter edge 110 of the blade.

Referring to FIG. 4B, the first pressure side rib 430, the second pressure side rib 432, the camber rib 434, and the pressure side wall 402 may define a pressure side cavity 456 from the set of pressure side cavities 416. In various embodiments, the pressure side cavity 456 may be quadrilateral shaped. In various embodiments, the pressure side cavity 456 may be trapezoidal shaped. Similarly, the first suction side rib 431, the second suction side rib 433, the camber rib 434, and the suction side wall 404 may define a suction side cavity 458. In various embodiments, the suction side cavity 458 may be quadrilateral shaped. In various embodiments, the suction side cavity may be trapezoidal shaped. In various embodiments, a fourth pressure side rib 732 and a fourth suction side rib 733 of the second plurality of ribs 425B may define a trailing edge cavity 454 with the pressure side wall 402 and the suction side wall 404. The length of camber rib 434 may be tailored to meet the desired number of pressure side cavities 416 or suction side cavities 418 and individual cavity areas such as pressure side cavity 456 and suction side cavity 458.

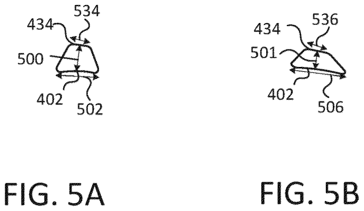

Turning to FIGS. 4A, 4B, 5A, and 5B, the plurality of airfoil ribs 425 are oriented in such a manner as to facilitate expansion of the pressure side wall 402 and the suction side wall 404 that occurs as the airfoil 120 is exposed to hot exhaust from the combustor section 26 of FIG. 1. In particular, the structure formed by the first plurality of airfoil ribs 425A and the second plurality of ribs 425B facilitates such expansion. Because the pressure side ribs 430, 432 and camber rib 434 are internal to the airfoil 120, they are exposed to less heat than the pressure side wall 402. In that regard, the pressure side wall 402 may experience greater thermal expansion than the pressure side ribs 430, 432 and the camber rib 434.

The structure formed by the plurality of airfoil ribs 425 facilitates this thermal expansion of the pressure side wall 402 with relatively little tensile and compressive stress between the plurality of airfoil ribs 425, the pressure side wall 402 and the suction side wall 404. As shown in FIG. 5A and in response to the airfoil 120 being exposed to relatively cool air, the camber rib 434 may define a first camber distance 534 and the pressure side wall 402 may define a first outside wall distance 502. Additionally, there may be a first cavity distance 500 between pressure side wall 402 and camber rib 434. The first camber distance 534 may be less than first outside wall distance 502.

In FIG. 5B, when the airfoil 120 is exposed to relatively hot air, the camber rib 434 may define a second camber distance 536, the pressure side wall 402 may define a second outside wall distance 506, and a second cavity distance 501 may be defined by the distance between the pressure side wall 402 and camber rib 434. In various embodiments, relatively hot air may be between 2500 °F (1371 °C) and 3800 °F (2093 °C). Due to the exposure to the hot airflow, the pressure side wall 402 may experience relatively large thermal expansion. In that regard, second outside wall distance 506 of the pressure side wall 402, in response to being in a relatively hot state, may be significantly greater than the first outside wall distance 502. However, because the camber rib 434 is not exposed to the hot airflow, the difference between the first outside wall distance 502 and the second outside wall distance 506 is more than the difference between the first camber distance 534 and the second camber distance 536. The arrangement of the plurality of airfoil ribs 425 facilitates this disparity in distance by allowing the cavity to compress in the circumferential direction such that the second cavity distance 501 is less than the first cavity distance 500.

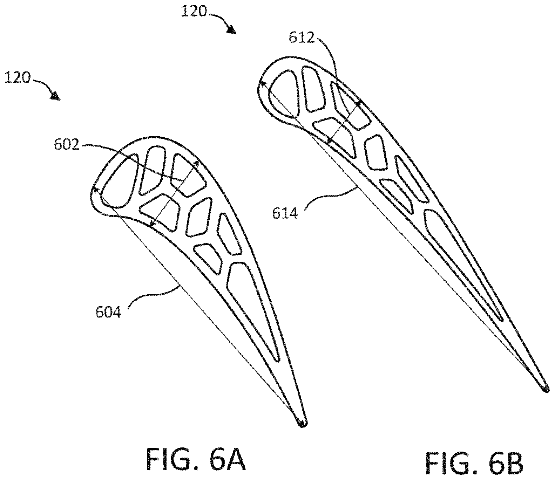

Referring now to Figure 6A, the airfoil 120 in a relatively cool state is depicted. In a cool state, the airfoil may have a first max camber distance 602 and a first chord distance 604. As shown in FIG. 6B, when the airfoil is exposed to relatively hot air, the airfoil 120 may compress, and result in a second max camber distance 612 and a second chord distance 614. The first max camber distance 602 may be greater than the second max camber distance 612. Whereas, the second chord distance 614 may be greater than the first chord distance 604. This configuration of cavities may permit a reduced number of discrete cooling cavities in an airfoil, while limiting the stresses in the airfoil due to thermal growth.

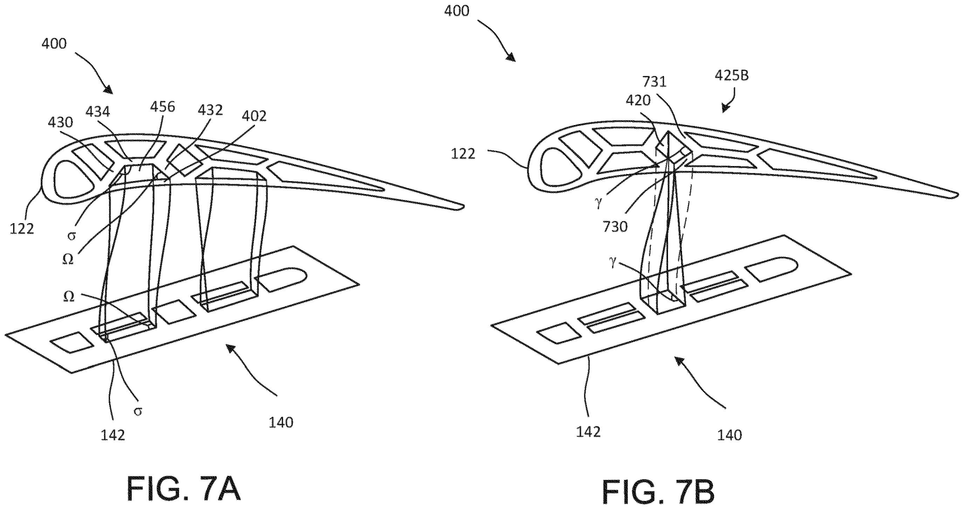

Referring to FIGs 7A and 7B, a radial cavity transitioning from a radial airfoil plane 122 to a radial attachment plane 142 of the attachment 140 is shown in accordance with various embodiments. Referring now to FIG. 7A, in airfoil cross sectional geometry 400, first pressure side rib 430 and camber rib 434 define an angle σ. The angle σ may be obtuse and may be between 110 degrees and 150 degrees. As shown, the angle σ decreases as pressure side cavity 456 transitions from radial airfoil plane 122 to radial attachment plane 142. In various embodiments, the angle σ decreases from between about 150 degrees in radial airfoil plane 122 to about 90 degrees in radial attachment plane 142. In contrast, the angle Ω, defined by second pressure side rib 432 and pressure side wall 402 in the airfoil cross sectional geometry 400, may be acute and may be between 30 degrees and 70 degrees. The angle Ω may increase as pressure side cavity 456 transitions from radial airfoil plane 122 to radial attachment plane 142. Angle Ω may increase from about 30 degrees in radial airfoil plane 122 to about 90 degrees in radial attachment plane 142.

Referring now to FIG. 7B, in airfoil cross sectional geometry 400, third pressure side rib 730 and third suction side rib 731 from the second plurality of ribs 425B define a rib angle γ. The angle γ may be between 60 degrees and 140 degrees in airfoil cross sectional geometry 400. The angle γ may increase as internal cavity 420 transitions from radial airfoil plane 122 to radial attachment plane 142. In various embodiments, the angle γ may increase from about 60 degrees in radial airfoil plane 122 to about 180 degrees in radial attachment plane 142.

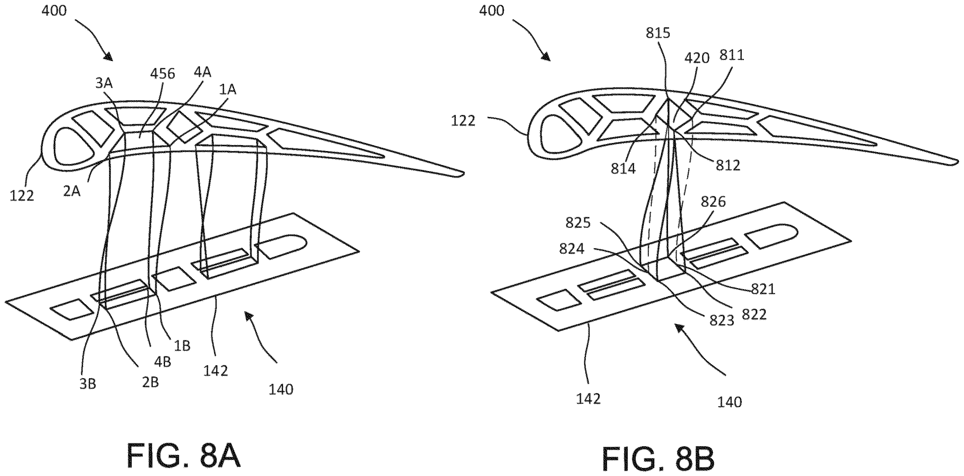

Referring now to FIG. 8A, the transition from the pressure side cavity 456 in the airfoil cross sectional geometry 400 to radial attachment plane 142 may be further defined by pressure cavity control points 1A, 2A, 3A, 4A and attachment control points 1B, 2B, 3B, 4B. As shown, transitioning from four control points to four control points makes a very smooth transition for the pressure cavity. Airfoil control points 1A, 2A, 3A may transition from an acute angle in airfoil cross sectional geometry 400 to a near right angle at attachment control points 1B, 2B, 3B in radial attachment plane 142. Airfoil control points 2A, 3A, 4A may transition from an obtuse angle in airfoil cross sectional geometry 400 to a near right angle at attachment control points 2B, 3B, 4B in radial attachment plane 142. Airfoil control points 3A, 4A, 1A may transition from an obtuse angle in airfoil cross sectional geometry 400 to a near right angle at attachment control points 3B, 4B, 1B in radial attachment plane 142. Airfoil control points 4A, 1A, 2A may transition from an acute angle in airfoil cross sectional geometry 400 to a near right angle at attachment control points 4B, 1B, 2B in radial attachment plane 142. Although referred to pressure side cavity 456, the control points described in this section may to apply to the set of pressure side cavities 416 and the set of suction side cavities 418.

Referring now to FIG 8B, the transition from the internal cavity 420 in the airfoil cross sectional geometry 400 to radial attachment plane 142 may be further defined by internal cavity control points 811, 812, 814, 815 and internal attachment control points 821, 822, 823, 824, 825, 826. As shown, control point 812 may transition from a vertex in airfoil cross sectional geometry 400 to a near linear line between control points 822 and 823 in radial attachment plane 142. Similarly, control point 815 may transition from a vertex to a near linear line between control points 825 and 826. In various embodiments, airfoil control points 815, 811, 812 may transition from an angle in airfoil cross sectional geometry 400 to attachment control points 826, 821, 822 forming a near linear line in radial attachment plane 142. Similarly, airfoil control points 812, 814, 815 may transition from an angle in airfoil cross sectional geometry to attachment control points 823, 824, 825 forming a near linear line in radial attachment plane 142.

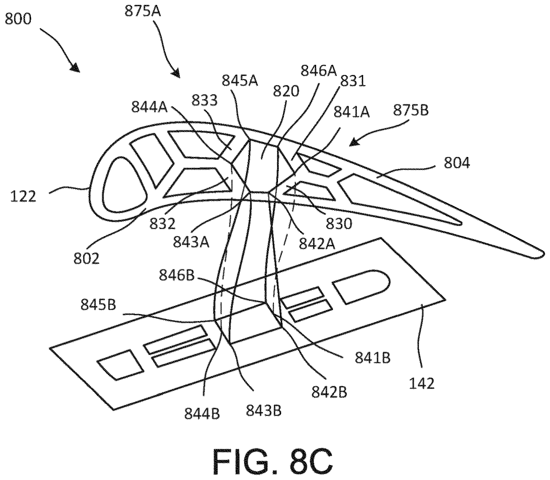

Referring now to FIG 8C, a further embodiment of a transition from an airfoil cross sectional geometry 800 having an internal cavity 820 according to the claimed invention is depicted. A first plurality of ribs 875A and a second plurality of ribs 875B are spaced along the pressure side wall 802 and suction side wall 804 of an airfoil. An aft pressure side rib 832 and an aft suction side rib 833 from the first plurality of ribs 875A, along with a forward pressure side rib 830 and a forward suction side rib 831 from the second plurality of ribs 875B, along with the pressure side wall 802 and suction side wall 804 define an internal cavity 820. By having internal cavity 820 exposed to pressure side wall 802 and suction side wall 804, a more uniform temperature distribution through the plurality of ribs (875A,875B) may be achieved. In various embodiments, the transition from the internal cavity 820 in the airfoil cross sectional geometry 800 to radial attachment plane 142 may be further defined by internal cavity control points 841A, 842A, 843A, 844A, 845A, 846A and internal attachment control points 841B, 842B, 843B, 844B, 845B, 846B.

As shown, transitioning from six control points to six control points makes a very smooth transition for internal cavity 820. Airfoil control points 841A, 842A, 843A may transition from an obtuse angle in airfoil cross sectional geometry 800 to a near right angle at attachment control points 841B, 842B, 843B in radial attachment plane 142. Airfoil control points 842A, 843A, 844A may transition from an obtuse angle in airfoil cross sectional geometry 800 to a near right angle at attachment control points 842B, 843B, 844B in radial attachment plane 142. Airfoil control points 843A, 844A, 845A may transition from an angle in airfoil cross sectional geometry 800 to a near linear line at attachment control points 843B, 844B, 845B in radial attachment plane 142. Airfoil control points 844A, 845A, 846A may transition from an obtuse angle in airfoil cross sectional geometry 800 to a near right angle at attachment control points 844B, 845B, 846B in radial attachment plane 142. Airfoil control points 845A, 846A, 841A may transition from an obtuse angle in airfoil cross sectional geometry 800 to a near right angle at attachment control points 845B, 846B, 841B in radial attachment plane 142. Airfoil control points 846A, 841A, 842A may transition from an angle in airfoil cross sectional geometry 800 to a near linear line at attachment control points 846B, 841B, 842B in radial attachment plane 142. This configuration of control points for internal cavity 820 allows for a smooth transition to the attachment end and allows for better structural loading in the attachment.

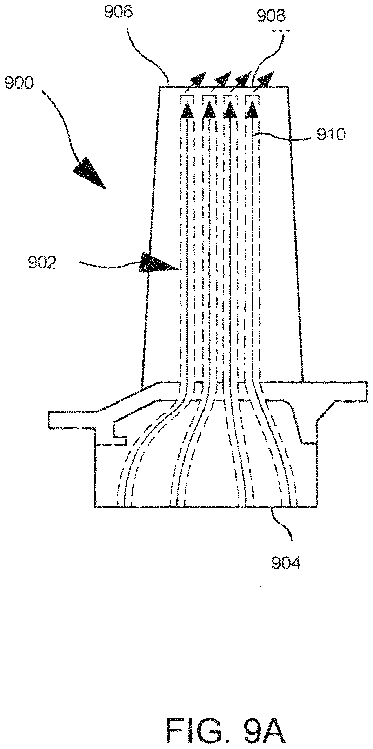

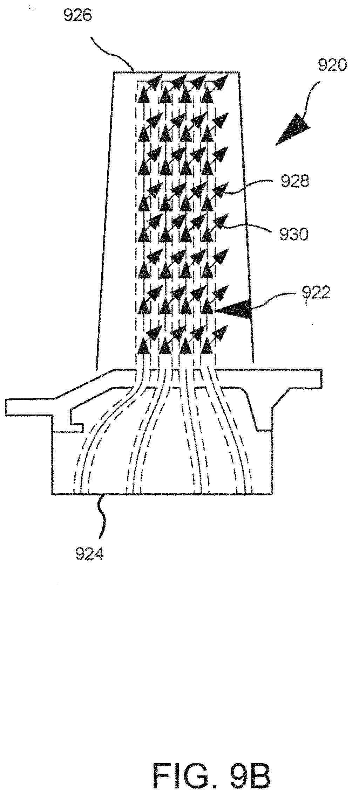

Referring now to FIGS. 4A, 9A, and 9B various blades 900, 920 may have ribs having a structure that defines cavities that are oriented in a similar manner as the ribs 410, 411,412, 413, 414, and 435 and cavities 450, 452, 454, 416, 418, and 420 of the blade 102. The various blades 900 and 920 may further include additional cooling features.

Referring now to FIG. 9A, the blade 900 may include radial cavities 902. The radial cavities 902 may receive air from an inner diameter edge 904. The air may flow radially outward through the radial cavities 902 and exit through tip holes 908 on an outer diameter edge 906 as shown by arrows 910. Referring now to FIGS. 7A, 7B, and 9A, the radial cavities 902 may comprise discrete cavities 416, 418, 420, 422, 424, 426 extending radially outward and exiting through tip holes 908. The radial cavities 902 may further transition from the radial attachment plane 142 in the attachment 140 as depicted in FIGS. 7A and 7B.

Referring to FIG. 9B, the blade 920 may include radial cavities 922 along with film holes 928. In that regard, the radial cavities 922 may receive air from an inner diameter edge 924. The air may flow radially outward through the radial cavities. The film holes 928 may be located along at least one of a pressure side wall or a suction side wall of the blade 920. In that regard, air from the radial cavities 922 exits the radial cavities 922 via the film holes 928 as it travels from the inner diameter edge towards an outer diameter edge 926 as shown by arrows 930.

## Claims

1. An airfoil (120) for use with a gas turbine engine (20), comprising:
a leading edge (406);
a trailing edge (408);
a pressure side wall (402; 802);
a suction side wall (404; 804);
a first plurality of ribs (425A; 875A), comprising:
a first pressure side rib (430) extending from the pressure side wall (402; 802) away from the leading edge (406);
a first suction side rib (431) extending from the suction side wall (404; 804) away from the leading edge (406) and forming a first vertex (440) with the first pressure side rib (430);
a second pressure side rib (432; 832) aft of the first pressure side rib (430) and extending from the pressure side wall (402; 802) away from the trailing edge (408);
a second suction side rib (433; 833) disposed aft of the first suction side rib (431) and extending from the suction side wall (404; 804) away from the trailing edge (408) and forming a second vertex (442) with the second pressure side rib (432; 832); and
a first internal rib (434) extending from the first vertex (440) to the second vertex (442); and
a second plurality of ribs (425B; 875B), the second plurality of ribs (425B; 875B) comprising:
a third pressure side rib (730; 830) disposed aft of the second pressure side rib (432; 832) and extending from the pressure side wall (402; 802) away from the leading edge (406);
a third suction side rib (731; 831) disposed aft of the second suction side rib (433; 833) and extending from the suction side wall (404; 804) away from the leading edge (406) and forming a third vertex with the third pressure side rib (730; 830);
a fourth pressure side rib disposed aft of the third pressure side rib (730; 830) and extending from the pressure side wall (402; 802) away from the trailing edge (408);
a fourth suction side rib disposed aft of the third suction side rib (731; 831) and extending from the suction side wall (404; 804) away from the trailing edge (408) and forming a fourth vertex with the fourth pressure side rib (732); and
a second internal rib extending from the third vertex to the fourth vertex,
**characterised in that**
the second pressure side rib (832), the second suction side rib (833), the third pressure side rib (830), the third suction side rib (831), the pressure side wall (802), and the suction side wall (804) form a hexagonal shaped cavity (820) in a radial airfoil cross section (800) of the airfoil (120).

2. The airfoil (120) of claim 1, wherein the first pressure side rib (430), the second pressure side rib (432; 832), the first internal rib (434), and the pressure side wall (402; 802) define a discrete quadrilateral shaped cavity (456) in a radial airfoil cross section (400; 800) of the airfoil (120).

3. The airfoil (120) of claim 2, wherein the discrete quadrilateral shaped cavity (456) is trapezoidal shaped in the radial airfoil cross section (400; 800).

4. A blade (102; 900; 920), comprising:
an attachment (140) having a radial attachment plane (142);
the airfoil (120) of claim 1, 2 or 3 disposed radially outward from the attachment (140).

5. The blade (102; 900; 920) of claim 4, wherein the third pressure side rib (730; 830) and third suction side rib (731; 831) form a second angle (γ) that increases to near 180 degrees as the third pressure side rib (730) and the third suction side rib (731) transition from a radial airfoil plane (122) to the radial attachment plane (142).

6. The blade (102; 900; 920) of claim 4 or 5, wherein a first end of the second pressure side rib (432) and a first end of the third pressure side rib (730) intersect in a radial airfoil plane (122) and separate as the second pressure side rib (432) and the third pressure side rib (730) transition from the radial airfoil plane (122) to the radial attachment plane (142).

7. The blade (102; 900; 920) of any of claims 4 to 6, wherein the first pressure side rib (430) and the first internal rib (434) form a first angle (σ), wherein the first angle (σ) transitions from an obtuse angle in a radial airfoil plane (122) to a nearly right angle in the radial attachment plane (142).

8. A gas turbine engine (20), comprising:
a turbine rotor comprising the blade (102; 900; 920) of any of claims 4 to 7.

## Patentansprüche

1. Schaufelprofil (120) zur Verwendung mit einem Gasturbinentriebwerk (20), umfassend:
eine Vorderkante (406);
eine Hinterkante (408);
eine Druckseitenwand (402; 802);
eine Saugseitenwand (404; 804);
eine erste Vielzahl von Rippen (425A; 875A), umfassend:
eine erste Druckseitenrippe (430), die sich von der Druckseitenwand (402; 802) von der Vorderkante (406) weg erstreckt;
eine erste Saugseitenrippe (431), die sich von der Saugseitenwand (404; 804) von der Vorderkante (406) weg erstreckt und mit der ersten Druckseitenrippe (430) einen ersten Scheitelpunkt (440) bildet;
eine zweite Druckseitenrippe (432; 832), die sich hinter der ersten Druckseitenrippe (430) befindet und sich von der Druckseitenwand (402; 802) von der Hinterkante (408) weg erstreckt;
eine zweite Saugseitenrippe (433; 833), die hinter der ersten Saugseitenrippe (431) angeordnet ist und sich von der Saugseitenwand (404; 804) von der Hinterkante (408) weg erstreckt und mit der zweiten Druckseitenrippe (432; 832) einen zweiten Scheitelpunkt (442) bildet; und
eine erste innere Rippe (434), die sich von dem ersten Scheitelpunkt (440) zu dem zweiten Scheitelpunkt (442) erstreckt; und
eine zweite Vielzahl von Rippen (425B; 875B), wobei die zweite Vielzahl von Rippen (425B; 875B) Folgendes umfasst:
eine dritte Druckseitenrippe (730; 830), die hinter der zweiten Druckseitenrippe (432; 832) angeordnet ist und sich von der Druckseitenwand (402; 802) von der Vorderkante (406) weg erstreckt;
eine dritte Saugseitenrippe (731; 831), die hinter der zweiten Saugseitenrippe (433; 833) angeordnet ist und sich von der Saugseitenwand (404; 804) von der Vorderkante (406) weg erstreckt und mit der dritten Druckseitenrippe (730; 830) einen dritten Scheitelpunkt bildet;
eine vierte Druckseitenrippe, die hinter der dritten Druckseitenrippe (730; 830) angeordnet ist und sich von der Druckseitenwand (402; 802) von der Hinterkante (408) weg erstreckt;
eine vierte Saugseitenrippe, die hinter der dritten Saugseitenrippe (731; 831) angeordnet ist und sich von der Saugseitenwand (404; 804) von der Hinterkante (408) weg erstreckt und mit der vierten Druckseitenrippe (732) einen vierten Scheitelpunkt bildet; und
eine zweite innere Rippe, die sich von dem dritten Scheitelpunkt zu dem vierten Scheitelpunkt erstreckt, **dadurch gekennzeichnet, dass** die zweite Druckseitenrippe (832), die zweite Saugseitenrippe (833), die dritte Druckseitenrippe (830), die dritte Saugseitenrippe (831), die Druckseitenwand (802) und die Saugseitenwand (804) einen sechseckig geformten Hohlraum (820) in einem radialen Schaufelprofilquerschnitt (800) des Schaufelprofils (120) bilden.

2. Schaufelprofil (120) nach Anspruch 1, wobei die erste Druckseitenrippe (430), die zweite Druckseitenrippe (432; 832), die erste innere Rippe (434) und die Druckseitenwand (402; 802) einen diskreten viereckig geformten Hohlraum (456) in einem radialen Schaufelprofilquerschnitt (400; 800) des Schaufelprofils (120) definieren.

3. Schaufelprofil (120) nach Anspruch 2, wobei der diskrete viereckig geformte Hohlraum (456) im radialen Schaufelprofilquerschnitt (400; 800) trapezförmig ist.

4. Laufschaufel (102; 900; 920), umfassend:
einen Aufsatz (140), der eine radiale Aufsatzebene (142) aufweist;
das Schaufelprofil (120) nach Anspruch 1, 2 oder 3, das von dem Aufsatz (140) radial nach außen angeordnet ist.

5. Laufschaufel (102; 900; 920) nach Anspruch 4, wobei die dritte Druckseitenrippe (730; 830) und die dritte Saugseitenrippe (731; 831) einen zweiten Winkel (γ) bilden, der auf nahezu 180 Grad zunimmt, wenn die dritte Druckseitenrippe (730) und die dritte Saugseitenrippe (731) von einer radialen Schaufelprofilebene (122) zu der radialen Aufsatzebene (142) übergehen.

6. Laufschaufel (102; 900; 920) nach Anspruch 4 oder 5, wobei ein erstes Ende der zweiten Druckseitenrippe (432) und ein erstes Ende der dritten Druckseitenrippe (730) sich in einer radialen Schaufelprofilebene (122) schneiden und sich trennen, wenn die zweite Druckseitenrippe (432) und die dritte Druckseitenrippe (730) von der radialen Schaufelprofilebene (122) zu der radialen Aufsatzebene (142) übergehen.

7. Laufschaufel (102; 900; 920) nach einem der Ansprüche 4 bis 6, wobei die erste Druckseitenrippe (430) und die erste innere Rippe (434) einen ersten Winkel (σ) bilden, wobei der erste Winkel (σ) von einem stumpfen Winkel in einer radialen Schaufelprofilebene (122) zu einem nahezu rechten Winkel in der radialen Aufsatzebene (142) übergeht.

8. Gasturbinentriebwerk (20), umfassend:
ein Turbinenrotor, der die Laufschaufel (102; 900; 920) nach einem der Ansprüche 4 bis 7 umfasst.

## Revendications

1. Profil aérodynamique (120) pour utilisation avec un moteur à turbine à gaz (20) comprenant :
un bord d'attaque (406) ;
un bord de fuite (408) ;
une paroi côté pression (402 ; 802) ;
une paroi côté aspiration (404 ; 804) ;
une première pluralité de nervures (425A ; 875A), comprenant :
une première nervure côté pression (430) se prolongeant depuis la paroi côté pression (402 ; 802) à distance du bord d'attaque (406) ;
une première nervure côté aspiration (431) se prolongeant depuis la paroi côté aspiration (404 ; 804) à distance du bord d'attaque (406) et formant un premier sommet (440) avec la première nervure côté pression (430) ;
une deuxième nervure côté pression (432 ; 832) à l'arrière de la première nervure côté pression (430) et se prolongeant depuis la paroi côté pression (402 ; 802) à distance du bord de fuite (408) ;
une deuxième nervure côté aspiration (433 ; 833) disposée à l'arrière de la première nervure côté aspiration (431) et se prolongeant depuis la paroi côté aspiration (404 ; 804) à distance du bord de fuite (408) et formant un deuxième sommet (442) avec la deuxième nervure côté pression (432 ; 832) ; et une première nervure interne (434) se prolongeant du premier sommet (440) au deuxième sommet (442) ; et
une seconde pluralité de nervures (425B ; 875B), la seconde pluralité de nervures (425B ; 875B) comprenant :
une troisième nervure côté pression (730 ; 830) disposée à l'arrière de la deuxième nervure côté pression (432 ; 832) et se prolongeant depuis la paroi côté pression (402 ; 802) à distance du bord d'attaque (406) ;
une troisième nervure côté aspiration (731 ; 831) disposée à l'arrière de la deuxième nervure côté aspiration (433 ; 833) et se prolongeant depuis la paroi côté aspiration (404 ; 804) à distance du bord d'attaque (406) et formant un troisième sommet avec la troisième nervure côté pression (730 ; 830) ;
une quatrième nervure côté pression disposée à l'arrière de la troisième nervure côté pression (730 ; 830) et se prolongeant depuis la paroi côté pression (402 ; 802) à distance du bord de fuite (408) ;
une quatrième nervure côté aspiration disposée à l'arrière de la troisième nervure côté aspiration (731 ; 831) et se prolongeant depuis la paroi côté aspiration (404 ; 804) à distance du bord de fuite (408) et formant un quatrième sommet avec la quatrième nervure côté pression (732) ; et
une seconde nervure interne se prolongeant du troisième sommet au quatrième sommet, **caractérisée en ce que**
la deuxième nervure côté pression (832), la deuxième nervure côté aspiration (833), la troisième nervure côté pression (830),
la troisième nervure côté aspiration (831), la paroi côté pression (802) et la paroi côté aspiration (804) forment une cavité de forme hexagonale (820) dans une section transversale de profil aérodynamique radial (800) du profil aérodynamique (120) .

2. Profil aérodynamique (120) selon la revendication 1, dans lequel la première nervure côté pression (430), la deuxième nervure côté pression (432 ; 832), la première nervure interne (434) et la paroi côté pression (402 ; 802) définissent une cavité discrète en forme de quadrilatère (456) dans une section transversale de profil aérodynamique radial (400 ; 800) du profil aérodynamique (120).

3. Profil aérodynamique (120) selon la revendication 2, dans lequel la cavité discrète en forme de quadrilatère (456) est de forme trapézoïdale dans la section transversale du profil aérodynamique radial (400 ; 800).

4. Pale (102 ; 900 ; 920), comprenant :
une fixation (140) ayant un plan de fixation radial (142) ;
le profil aérodynamique (120) selon la revendication 1, 2 ou 3 est disposé radialement vers l'extérieur de la fixation (140).

5. Pale (102 ; 900 ; 920) selon la revendication 4, dans laquelle la troisième nervure côté pression (730 ; 830) et la troisième nervure côté aspiration (731 ; 831) forment un second angle (γ) qui augmente jusqu'à près de 180 degrés lorsque la troisième nervure côté pression (730) et la troisième nervure côté aspiration (731) passent d'un plan de profil aérodynamique radial (122) au plan de fixation radial (142).

6. Pale (102 ; 900 ; 920) selon la revendication 4 ou 5, dans laquelle une première extrémité de la deuxième nervure côté pression (432) et une première extrémité de la troisième nervure côté pression (730) se coupent dans un plan de profil aérodynamique radial (122) et se séparent lorsque la deuxième nervure côté pression (432) et la troisième nervure côté pression (730) passent du plan de profil aérodynamique radial (122) au plan de fixation radial (142).

7. Pale (102; 900 ; 920) selon l'une quelconque des revendications 4 à 6, dans laquelle la première nervure côté pression (430) et la première nervure interne (434) forment un premier angle (σ), dans laquelle le premier angle (σ) passe d'un angle obtus dans un plan de profil aérodynamique radial (122) à un angle presque droit dans le plan de fixation radial (142).

8. Moteur à turbine à gaz (20) comprenant :
un rotor de turbine comprenant la pale (102 ; 900 ; 920) selon l'une quelconque des revendications 4 à 7.
